# EUROPEAN PATENT SPECIFICATION

(11) **EP 2 885 879 B1**
(45) Date of publication and mention of the grant of the patent: **21.11.2018**
(21) Application number: 13750309.0
(22) Date of filing: 13.08.2013
(51) Int. Cl.: H04B 5/00

(54) **COMMUNICATION EQUIPMENT BASED ON LEAKY COAXIAL CABLE**
KOMMUNIKATIONSVORRICHTUNG UNTER VERWENDUNG VON KOAXIALEN LECKLEITUNGEN
ÉQUIPEMENT DE COMMUNICATION BASÉ SUR CÂBLE COAXIAL RAYONNANT

(30) Priority: 14.08.2012 CN 201210289367
(43) Date of publication of application: 24.06.2015
(73) Proprietor: Siemens Mobility GmbH, 81739 München (DE)
(72) Inventor: LAMPE, Mattias, Beijing 100102 (CN); ZHANG, Jie, Beijing 100102 (CN)
(74) Representative: Isarpatent
(86) International application number: PCT/EP2013/066906
(87) International publication number: WO 2014/026985

(56) References cited:
- WO-A1-95/06365
- DE-A1- 2 728 765
- GB-A- 1 478 895
- US-A1- 2007 063 771
- US-A1- 2011 223 958
- US-B1- 6 549 754

## Description

### Technical Field

The present invention relates to the field of communications, and particularly, to cable-based communication equipment.

### Background Art

In the field of communications, compared with conventional antennas, leaky cables (leaky coaxial cables) are better for situations where the wireless signal coverage is needed to determine a path. A leaky cable emits radio frequency (RF) power along its entire length and therefore may be seen as a special kind of antenna. The coverage area of wireless signals is usually only limited to be near the cable, for example, within a few meters, and thus may avoid mutual interference with other systems.

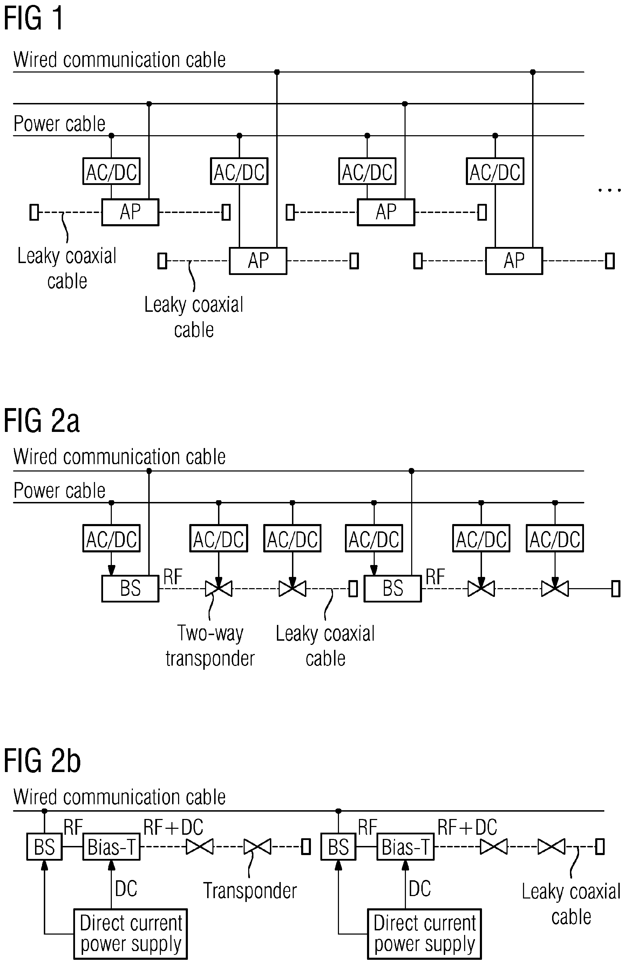

Recently, wireless automatic train control and subway passenger information systems choose wireless local area network (WLAN) technology as the technological base. Fig. 1 shows a conventional communication system architecture based on wireless local area network technology. Typically, two independent communication backbone mechanisms are built in order to achieve redundancy and stability. As shown in Fig. 1, since power cables and wired communication cables need to be provided, material cost and installation cost are very high.

In some systems, the frequency domains of the uplink and downlink are separated. In such a system, two-way transponders are provided on a leaky cable with fixed intervals therebetween to amplify a weakened signal and extend the coverage area. However, since the transponder will generate cross interference that may be superimposed, the requirement on the quality of the transponder is very high and only a limited number of transponders may be used.

In the case where a transponder is used, there are usually two power supply modes. A mode is as shown in Fig. 2a, where power is directly supplied to the transponder using a power cable in the case of a long transmission distance. Another mode is as shown in Fig. 2b, where a T-shaped direct current biasing apparatus (Bias-T) superimposes RF onto direct current, and then this direct current superimposed with RF supplies power to each transponder through a leaky cable.

Since the wireless local area network system (e.g., IEEE 802.11 a/b/g) uses the same frequency band in the uplink and downlink, the transponders need to know the current data transmission direction, i.e., uplink or downlink, and must switch between amplification in the uplink direction and amplification in the downlink direction. This kind of switching delay will affect the operation of the system, especially when a plurality of transponders are arranged along the input line in a cascading manner. For this reason, there are no transponders on the market that may be used for the wireless local area network on the leaky input line.

GB 1478895 discloses an improved communication system in which a radiating transmission line in the form a radiating cable or leaky feeder is utilized to transmit data to a receiver positioned anywhere along the length of the cable.

### Contents of the Invention

The object of the present invention is to provide communication equipment based on a leaky cable. The object is achieved by communication equipment as defined in claims 1 and 4.

According to one aspect of the present invention, communication equipment is provided, which comprises: at least one primary access apparatus connected to the backbone network, and at least two secondary access apparatus, wherein the secondary access apparatus are connected to each other through a cable and are connected to the primary access apparatus through cables, and wherein the at least two secondary access apparatus are constructed to be able to communicate with each other, and the primary access apparatus and the at least two secondary access apparatus are constructed to be able to communicate with one another.

Said two secondary access apparatus which are directly connected to each other through said cable are constructed to be a client and network proxy equipment for the other.

The primary access apparatus comprises: a network access apparatus connected to the backbone network; a T-shaped direct current biasing apparatus connected to the network access apparatus and the cable; and a power supply supplying power to the network access apparatus and the T-shaped direct current biasing apparatus.

Said cable is a leaky coaxial cable.

The secondary access apparatus may communicate with each other in a wired or wireless mode.

According to another aspect of the present invention, communication equipment is provided, which comprises: node equipment comprising at least two network access devices, each of the network devices connecting to a T-shaped direct current biasing apparatus, and a power supply supplying power to said at least two network access devices and the corresponding T-shaped direct current biasing apparatus; and at least two secondary access apparatus, wherein the secondary access apparatus are connected to each other through a cable and are connected to said node equipment through cables; wherein the at least two secondary access apparatus are constructed to be able to communicate with each other, and the network access devices and the at least two secondary access apparatus are constructed to be able to communicate with one another.

Said two secondary access apparatus which are directly connected through said cable are constructed to be a client and network proxy equipment for the other.

Said cable is a leaky coaxial cable.

The secondary access apparatus may communicate with each other in a wired or wireless mode.

The positive and progressive effects of the present invention lie in that: since only the leaky cable is required to simultaneously transmit signals and electric power, the material cost and the installation and maintenance cost are relatively low; it is easy to implement, and is flexible, especially suitable for applications within a limited space; it requires little adjustment and change over the existing hardware system; and it requires no special wireless network devices.

### Description of the accompanying drawings

The particular embodiments of the present invention will be described below in conjunction with the accompanying drawings, in which:
Fig. 1 is a schematic diagram of a communication system based on a wireless local area network;
Figs. 2a and 2b are respective schematic diagrams of the modes for supplying power to transponders;
Fig. 3 is a schematic diagram of communication equipment according to one embodiment of the present invention; and
Fig. 4 is a schematic diagram of communication equipment according to another embodiment of the present invention.

### Particular Embodiments

The present invention will be described below in conjunction with preferred embodiments of the present invention. A large number of specific details are included in the description below. However, a person skilled in the art could understand that the present invention may also be realized without using some or all of these details. In some cases, the known art is not described so as to avoid unnecessary confusion.

As described above, when a wireless signal needs to be deployed along a certain route or in an enclosed space, a leaky cable is usually used. Several notches or holes are provided on a conductor of the leaky cable. As such, wireless signals are emitted from the notch to a nearby space, which thereby integrates signal transmission and signal emitting and receiving functions together. Therefore, leaky cables are widely used in areas where wireless signal propagation is limited or are difficult to cover. In an application environment of the leaky cable, a wireless client (i.e., equipment that needs to use the wireless signal) uses the wireless signal leaked out from the leaky cable to perform data transmission with other equipment.

When an electrical signal is transmitted over the cable, the signal strength will progressively decrease with the increase of the transmission length, and therefore the signal needs to be re-enhanced by transponders. A transponder is equipment that enhances and amplifies a signal, and is only used to enhance the signal over a cable so as to send the signal further, thereby increasing the transmission distance. According to the theory of the leaky cable, transponders can only enhance electrical signals transmitted over the cable, but cannot enhance wireless signals of a nearby space.

In wireless local area network technology, a wireless access point (AP) is an interface used to connect wireless equipment to the network, and wireless access points communicate with wireless equipment. Wireless access points have a client mode, and may carry out data transmission with other equipment using a wireless communication mode and a wired communication mode. For example, a wireless access point may use a wired connection mode with the parent network node connected thereto, and act as a client of the parent network node.

In the existing system as shown in Fig. 1, although a plurality of access points are used, each access point is provided over an individual leaky cable, the leaky cable is not used to connect among various access points, and there is either no data transmission or a communication performed by means of an additional wired communication cable.

The system of Fig. 2b uses a T-shaped direct current biasing apparatus to supply power to each transponder. A T-shaped direct current biasing apparatus is three-port network devices which is used to supply power to remote equipment over the same coaxial cable of a transmitted RF signal. As described above, since cross interference will be generated between the transponders, the requirements on the distance between the transponders, the quantity and quality of the transponders are very high.

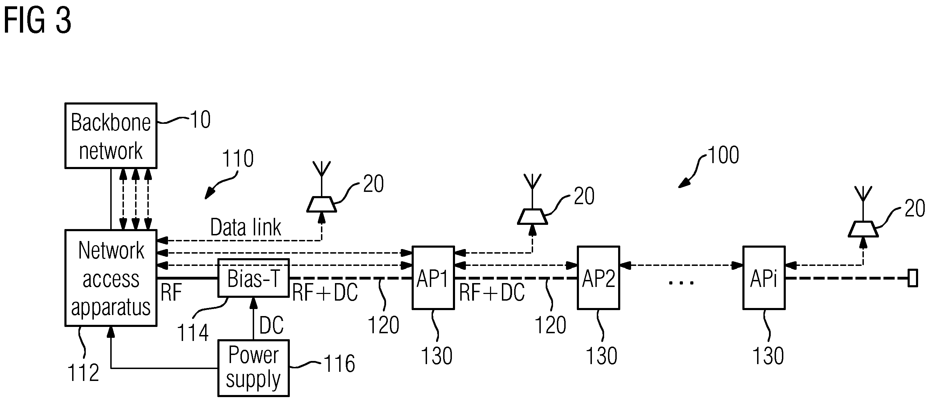

Fig. 3 shows an embodiment of the communication equipment according to the present invention. Said communication equipment 100 comprises a primary access apparatus 110 which accesses the backbone network 10. The primary access apparatus 110 comprises a network access apparatus 112, which may be a wireless access apparatus or a wired access apparatus. A T-shaped direct current biasing apparatus 114 is connected to the network access apparatus 112. A power supply 116 is connected to the network access apparatus 112 and the T-shaped direct current biasing apparatus 114, and is used to supply power to these two apparatus. A cable 120 is connected to the T-shaped direct current biasing apparatus 114. The cable 120 may be provided thereon with at least two secondary access apparatus 130. In this embodiment, said secondary access apparatus are wireless access points. Said cable 120 may be a leaky coaxial cable. As described above, the T-shaped direct current biasing apparatus transmits direct current superimposed with RF along the coaxial cable, so as to supply power to each of said secondary access apparatus 130. Said network access apparatus 112 may be any suitable apparatus used for connecting to the Internet or other computer networks, and it comprises, but is not limited to, a combination of software, hardware, or firmware. A person skilled in the art would, according to the description of this specification, be able to select an appropriate apparatus from the prior art according to the specific application.

Fig. 3 shows i secondary access apparatus, and to facilitate description, the secondary access apparatus 130 may be denoted as AP₁, AP₂...APᵢ from near to far according to the distance from the primary access apparatus 110, and said network access apparatus may be denoted as APₘ.

In the embodiment as shown in Fig. 3, the downlink data is transmitted from APₘ to APᵢ, while the uplink data is transmitted from APᵢ to APₘ. For example, when client equipment 20 of AP₁ (i.e., wireless equipment in communication with AP₁) is receiving data, the data goes from APₘ to the coaxial cable 120 and reaches AP₁, and is then transmitted by AP₁ to the client equipment 20. In addition, when the client equipment 20 is sending data, the data is first sent to AP₁, and then goes through the coaxial cable 120 and reaches APₘ, and is then transmitted to the backbone network.

In this case, AP₂ may be constructed to be a client of AP₁,- therefore, AP₂ will compete with the client equipment 20 for the bandwidth resources of AP₁. Meanwhile, AP₂ is constructed to have a higher priority than the client equipment 20 described above. Similarly, AP₃ may be constructed to be a client of AP₂ and have a higher priority than normal client equipment. Similarly, APᵢ is constructed to be a client of APᵢ₋₁ and has a relatively high priority.

A person skilled in the art could understand that said priority may be a sequence for the access points to process requests when a plurality of clients are competing for bandwidth resources, and having a relatively high priority means that a request sent by the client can be processed earlier than the requests of other clients. A person skilled in the art would be able to realize the described state of having a relatively high priority according to relevant prior art.

Apparently, the data transmitted to APᵢ must pass through paths like APᵢ₋₁, APᵢ₋₂...AP₂, AP₁ and be transmitted to APₘ; therefore, AP₁ is constructed to be network proxy equipment of AP₂, and likewise, APᵢ₋₁ is constructed to be network proxy equipment of APᵢ. Conversely, the data sent out by APₘ needs to be transmitted through paths like AP₁, AP₂...APᵢ.

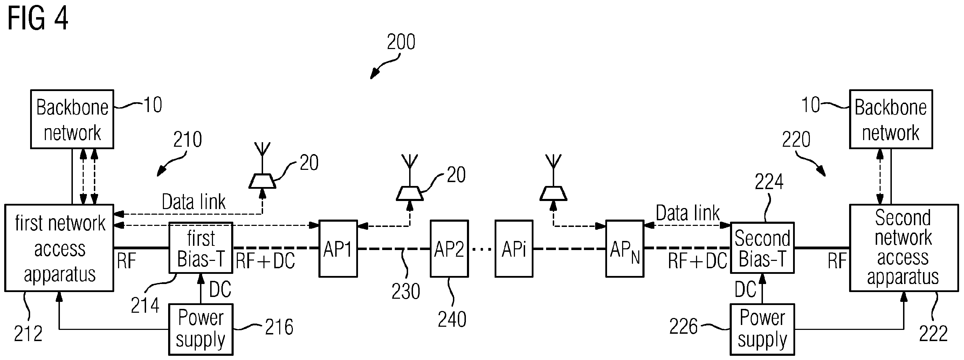

Fig. 4 shows yet another embodiment of the present invention. Communication equipment 200 comprises a first primary access apparatus 210 and a second primary access apparatus 220. The first primary access apparatus 210 comprises a first network access apparatus 212, a first T-shaped direct current biasing apparatus 214 connected to the first network access apparatus 212, and a power supply 216 connected to the first network access apparatus 212 and the first T-shaped direct current biasing apparatus 214 for power supply. The second primary access apparatus 220 comprises a second network access apparatus 222, a second T-shaped direct current biasing apparatus 224 connected to the second network access apparatus 222, and a power supply 226 connected to the second network access apparatus 222 and the second T-shaped direct current biasing apparatus 224 for power supply. A cable 230 is connected between the first and second T-shaped direct current biasing apparatus 214 and 224, and the cable 230 is provided thereon with at least two secondary access apparatus 240.

The first and second network access apparatus 212 and 222 may be the same as or different from the network access apparatus 112 in the embodiment shown in Fig. 3, and may use any suitable apparatus for connecting to the Internet or other computer networks. Said cable may be a leaky coaxial cable. Likewise, the first and second T-shaped direct current biasing apparatus 214 and 224 transmit direct current superimposed with RF along the coaxial cable, so as to supply power to each of said secondary access apparatus 240.

The embodiment of Fig. 4 shows n secondary access apparatus 240. Similarly, to facilitate description, the secondary access apparatus 240 are denoted as AP₁, AP₂...APₙ₋₁, APₙ from near to far according to the distance from the first primary access apparatus 210.

In this embodiment, the two secondary access apparatus 240 which are directly connected through the cable 230 are constructed to be a client for the other and are constructed to be network proxy equipment for the other. For example, for any three adjacent secondary access apparatus APᵢ₋₁, APᵢ and APᵢ₊₁, APᵢ₋₁ and APᵢ are directly connected through the cable 230, while APᵢ and APᵢ₊₁ are directly connected through the cable 230. Then, APᵢ₋₁ is constructed to be a client of APᵢ, and APᵢ is also constructed to be a client of APᵢ₋₁. Moreover, APᵢ₋₁ is constructed to be network proxy equipment of APᵢ, and APᵢ is constructed to be network proxy equipment of APᵢ₋₁. Likewise, APᵢ and APᵢ₊₁ may also be constructed in a similar way.

That is, each secondary access apparatus is not only a client of another adjacent secondary access apparatus directly connected through a cable, but also network proxy equipment of this other secondary access apparatus. Thus, each secondary access apparatus may be constructed to communicate with the first primary access apparatus 210 or the second primary access apparatus 220. For example, one of the secondary access apparatus APᵢ may not only communicate with the first primary access apparatus 210 (see the left side in Fig. 4), but also communicate with the second primary access apparatus 220 (see the right side in Fig. 4). The secondary access apparatus APᵢ may communicate with the first primary access apparatus 210 within a period of time, and communicate with the second primary access apparatus 220 within another period of time.

For example, for any three of the above-mentioned adjacent secondary access apparatus APᵢ₋₁, APᵢ and APᵢ₊₁, when APᵢ is communicating with the first primary access apparatus 210, data may go from APᵢ to APᵢ₋₁, APᵢ₋₂, ..., AP₁ and reach the first primary access apparatus 210, and vice versa. In addition, when APᵢ is communicating with the second primary access apparatus 220, data may go from APᵢ to APᵢ₊₁, APᵢ₊₂, ..., APₙ and reach the second primary access apparatus 220, and vice versa.

In specific applications, any one of the secondary access apparatus APᵢ may be provided, as required and using any suitable existing technology, to communicate with the first or second primary access apparatus 210 or 220 at a certain moment.

Similarly, for secondary access apparatus APᵢ and APᵢ₊₁ which are constructed to be a client for each other, APᵢ has a higher priority than other clients of APᵢ₊₁ (referring to clients of non-secondary client access apparatus), and APᵢ₊₁ has a higher priority than other clients of APᵢ (referring to clients of non-secondary client access apparatus). Since a client of a secondary access side may have two secondary access apparatus as its clients (i.e., adjacent secondary access apparatus), a person skilled in the art may set the priority of the secondary access apparatus as clients according to the specific application environment.

Alternatively, the direction of data transmission by the secondary access apparatus APᵢ at a certain moment is unidirectional. That is, at a certain moment, APᵢ is a client or network proxy equipment of the adjacent secondary access apparatus. Thus, the priorities of the adjacent secondary access apparatus which are connected to the same secondary access apparatus APᵢ as its clients may be set independently of each other, and are not affected by each other.

For the embodiment shown in Fig. 3, the adjacent secondary access apparatus may also be set as clients and network proxy equipment of each other, although it may not be required in actual use.

The communication equipment of the present invention may be applied to urban rail transit, such as the subway. A primary access apparatus may be provided at each station, which is the same as in the primary access apparatus 110, 210 and 220 described in Figs. 3 and 4. Because the subway often has two tracks, that is, trains in two directions run at the same time, two cables are respectively required for trains in different directions, and two primary access apparatus are deployed in the same station, which are respectively used for communicating with trains running on the same track.

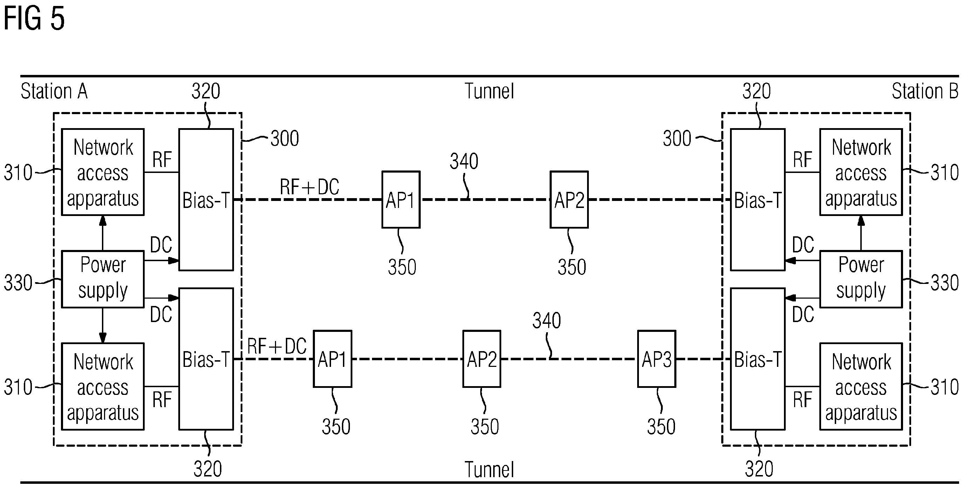

Fig. 5 shows an embodiment of applying the communication equipment of the present invention to the subway system. To facilitate description, Fig. 5 only shows the situation where two stations A and B are included, but it should not be considered as a limitation on the present invention.

In the embodiment of Fig. 5, node devices 300 are respectively deployed in the first station A and the second station B, in which each node device 300 comprises two network access devices 310, two T-shaped direct current biasing apparatus 320 respectively connected to these two network access devices, a power supply 330 supplying power to said two network access devices 310 and two T-shaped direct current biasing apparatus 320. Of course, in other examples, it is also possible to provide two power supplies to supply power separately. Two cables 340 are respectively connected between the two node devices 300, and each cable is connected to the T-shaped direct current biasing apparatus 320 corresponding to said two node devices 300. Said cable may be a leaky coaxial cable.

Said network access apparatus 310 are similar to the network access apparatus in Fig. 3 or 4 and may be any suitable apparatus used for connecting to the Internet or other computer networks.

Said two cables 340 respectively correspond to a train track. Similar to the embodiment of Fig. 3 or 4, at least two secondary access apparatus 350 are provided on each cable 340. The configuration of the secondary access apparatus 350 on each cable 340 is the same as the embodiment shown in Fig. 3 or 4, i.e., directly connected adjacent secondary access apparatus are constructed as the client and network proxy equipment of each other, and the priority of the secondary access apparatus that acts as a client is relatively high. Likewise, the secondary access apparatus may be constructed to communicate with any one of the two connected node devices.

Using the embodiment shown in Fig. 5, each train track is respectively provided with a cable, and each station is provided with node equipment 300, so that data communication may be maintained with equipment on the train (e.g., vehicle-mounted equipment or equipment held by passengers) during the operational process of the train.

Although the embodiment of Fig. 5 shows that the node equipment 300 includes two network access devices 310, the node equipment may include more network access devices. Moreover, the node equipment 300 may be provided with more than two cables therebetween. Accordingly, the node equipment may also include more T-shaped direct current biasing apparatus. A person skilled in the art could select the number of said parts in the node equipment according to the specific application.

With the above embodiments, a person skilled in the art could understand that the present invention solves the problems of signal coverage and signal transmission strength and can facilitate application and lower the cost.

The present invention is described in detail above in conjunction with particular implementations. However, a person skilled in the art will understand that some modifications and equivalent modes also exist in the scope of the present invention as defined in the appended claims.

## Claims

1. Communication equipment comprising:
at least one primary access apparatus (110) connected to the backbone network (10); and
at least two secondary access apparatus(130), wherein the secondary access apparatus(130) are connected to each other through a leaky coaxial cable (120) and are connected to the primary access apparatus through leaky coaxial cables(120);
**characterized in that** the at least two secondary access apparatus (130) are constructed to be able to communicate with each other via the leaky coaxial cable, and the primary access apparatus (110) and the at least two secondary access apparatus (130) are constructed to be able to communicate with one another via the leaky coaxial cables;
wherein said two secondary access apparatus (130) which are directly connected to each other through said leaky coaxial cable are constructed to be a client and network proxy equipment for the other.

2. The communication equipment as claimed in claim 1, **characterized in that** the primary access apparatus (110) comprises: a network access apparatus (112) connected to the backbone network (10); a T-shaped direct current biasing apparatus (114) connected to the network access apparatus (112) and the leaky cable (120); and a power supply (116) supplying power to the network access apparatus (112) and the T-shaped direct current biasing apparatus (114).

3. The communication equipment as claimed in claim 1, **characterized in that** the secondary access apparatus (130) may communicate with each other in a wired or wireless mode.

4. Communication equipment, **characterized in that** the equipment comprises:
node equipment (300) comprising at least two network access devices (310), each of the network access devices (310) connecting to a T-shaped direct current biasing apparatus (320), and a power supply (330) supplying power to said at least two network access devices (310) and a corresponding T-shaped direct current biasing apparatus (320); and
at least two secondary access apparatus (350), wherein the secondary access apparatus (350) are connected to each other through a leaky coaxial cable (340), and each T-shaped direct current biasing apparatus (320)is connected to one secondary access apparatus (350)through a leaky coaxial cables(340) ;
wherein the at least two secondary access apparatus are constructed to be able to communicate with each other via the leaky cable (340), and the network access devices (310) and the at least two secondary access apparatus (350) are constructed to be able to communicate with one another;
wherein said two secondary access apparatus which are directly connected through said leaky coaxial cable are constructed to be a client and network proxy equipment for the other.

5. The communication equipment as claimed in claim 4, **characterized in that** the secondary access apparatus (350) may communicate with each other in a wired or wireless mode.

## Patentansprüche

1. Kommunikationsausrüstung, die Folgendes umfasst:
mindestens eine primäre Zugangseinrichtung (110), die mit dem Backbonenetzwerk (10) verbunden ist; und
mindestens zwei sekundäre Zugangseinrichtungen (130), wobei die sekundären Zugangseinrichtungen (130) über ein Leckkoaxialkabel (120) miteinander verbunden sind und über Leckkoaxialkabel (120) mit der primären Zugangseinrichtung verbunden sind;
**dadurch gekennzeichnet, dass** die mindestens zwei sekundären Zugangseinrichtungen (130) derart konstruiert sind, dass sie via das Leckkoaxialkabel miteinander kommunizieren können, und die primäre Zugangseinrichtung (110) und die mindestens zwei sekundären Zugangseinrichtungen (130) derart konstruiert sind, dass sie via die Leckkoaxialkabel miteinander kommunizieren können;
wobei die zwei sekundären Zugangseinrichtungen (130), die über das Leckkoaxialkabel direkt miteinander verbunden sind, derart konstruiert sind, dass sie für die andere ein Client und eine Netzwerkproxyausrüstung sind.

2. Kommunikationsausrüstung nach Anspruch 1, **dadurch gekennzeichnet, dass** die primäre Zugangseinrichtung (110) Folgendes umfasst: eine Netzwerkzugangseinrichtung (112), die mit dem Backbonenetzwerk (10) verbunden ist, eine T-förmige Gleichstromvorspanneinrichtung (114), die mit der Netzwerkzugangseinrichtung (112) und dem Leckkabel (120) verbunden ist, und eine Stromversorgung (116), die die Netzwerkzugangseinrichtung (112) und die T-förmige Gleichstromvorspanneinrichtung (114) mit Strom versorgt.

3. Kommunikationsausrüstung nach Anspruch 1, **dadurch gekennzeichnet, dass** die sekundären Zugangseinrichtungen (130) in einem drahtgebundenen oder drahtlosen Modus miteinander kommunizieren können.

4. Kommunikationsausrüstung, **dadurch gekennzeichnet, dass** die Ausrüstung Folgendes umfasst:
eine Knotenausrüstung (300), die mindestens zwei Netzwerkzugangsvorrichtungen (310) umfasst, wobei jede der Netzwerkzugangsvorrichtungen (310) mit einer T-förmigen Gleichstromvorspanneinrichtung (320) verbunden ist, und eine Stromversorgung (330), die die mindestens zwei Netzwerkzugangsvorrichtungen (310) und eine entsprechende T-förmige Gleichstromvorspanneinrichtung (320) mit Strom versorgt; und
mindestens zwei sekundäre Zugangseinrichtungen (350), wobei die sekundären Zugangseinrichtungen (350) über ein Leckkoaxialkabel (340) miteinander verbunden sind und jede T-förmige Gleichstromvorspanneinrichtung (320) über ein Leckkoaxialkabel (340) mit einer sekundären Zugangseinrichtung (350) verbunden ist;
wobei die mindestens zwei sekundären Zugangseinrichtungen derart konstruiert sind, dass sie via das Leckkabel (340) miteinander kommunizieren können, und die Netzwerkzugangsvorrichtungen (310) und die mindestens zwei sekundären Zugangseinrichtungen (350) derart konstruiert sind, dass sie miteinander kommunizieren können;
wobei die zwei sekundären Zugangseinrichtungen, die über das Leckkoaxialkabel direkt verbunden sind, derart konstruiert sind, dass sie für die andere ein Client und eine Netzwerkproxyausrüstung sind.

5. Kommunikationsausrüstung nach Anspruch 4, **dadurch gekennzeichnet, dass** die sekundären Zugangseinrichtungen (350) in einem drahtgebundenen oder drahtlosen Modus miteinander kommunizieren können.

## Revendications

1. Équipement de communication comprenant :
au moins un appareil d'accès primaire (110) connecté au réseau fédérateur (10) ; et
au moins deux appareils d'accès secondaires (130), les appareils d'accès secondaires (130) étant connectés les uns aux autres par le biais d'un câble coaxial à fuite (120) et étant connectés à l'appareil d'accès primaire par le biais des câbles coaxiaux à fuite (120) ;
**caractérisé en ce que**
les deux appareils d'accès secondaires (130), ou plus, sont élaborés pour être capables de communiquer les uns avec les autres par le biais du câble coaxial à fuite, et l'appareil d'accès primaire (110) et les deux appareils d'accès secondaires (130), ou plus, sont élaborés pour être capables de communiquer les uns avec les autres par le biais des câbles coaxiaux à fuite ;
dans lequel lesdits deux appareils d'accès secondaires (130) qui sont connectés directement les uns aux autres par le biais dudit câble coaxial à fuite sont élaborés pour être un client et un équipement mandataire de réseau pour l'autre.

2. Équipement de communication selon la revendication 1, **caractérisé en ce que** l'appareil d'accès primaire (110) comprend : un appareil d'accès de réseau (112) connecté au réseau fédérateur (10) ; un appareil de polarisation de courant continu en forme de T (114) connecté à l'appareil d'accès de réseau (112) et au câble à fuite (120) ; une alimentation électrique (116) fournissant de l'énergie à l'appareil d'accès de réseau (112) et à l'appareil de polarisation de courant continu en forme de T (114).

3. Équipement de communication selon la revendication 1, **caractérisé en ce que** les appareils d'accès secondaires (130) peuvent communiquer les uns avec les autres dans un mode avec fil ou sans fil.

4. Équipement de communication, **caractérisé en ce que** l'équipement comprend :
un équipement de noeud (300) comprenant deux dispositifs d'accès de réseau (310), ou plus, chacun des dispositifs d'accès de réseau (310) se connectant à un appareil de polarisation de courant continu en forme de T (320), et une alimentation électrique (330) fournissant de l'énergie auxdits deux dispositifs d'accès de réseau (310), ou plus, et à un appareil de polarisation de courant continu en forme de T (320) correspondant ; et
deux appareils d'accès secondaires (350), ou plus, les appareils d'accès secondaires (350) étant connectés les uns aux autres par le biais d'un câble coaxial à fuite (340), et chaque appareil de polarisation de courant continu en forme de T (320) est connecté à un appareil d'accès secondaire (350) par le biais d'un câble coaxia à fuite (340) ;
dans lequel les deux appareils d'accès secondaires, ou plus, sont élaborés pour être capables de communiquer les uns avec les autres par le biais du câble à fuite (340), et les dispositifs d'accès de réseau (310) et les deux appareils d'accès secondaires (350), ou plus, sont élaborés pour être capables de communiquer les uns avec les autres ;
dans lequel lesdits deux appareils d'accès secondaires qui sont connectés directement par le biais dudit câble coaxial à fuite sont élaborés pour être un client et un équipement mandataire de réseau pour l'autre.

5. Équipement de communication selon la revendication 4, **caractérisé en ce que** les appareils d'accès secondaires (350) peuvent communiquer les uns avec les autres dans un mode avec fil et/ou sans fil.
